# EUROPÄISCHE PATENTSCHRIFT

(11) **EP 0 806 071 B1**
(45) Veröffentlichungstag und Bekanntmachung des Hinweises auf die Patenterteilung: **09.12.1998**
(21) Anmeldenummer: 95906987.3
(22) Anmeldetag: 24.01.1995
(51) Int. Cl.: H02H 3/14, H02H 9/04, B60M 5/02

(54) **ÜBERSPANNUNGSSCHUTZGERÄT**
OVERVOLTAGE PROTECTOR
LIMITEUR DE TENSION

(43) Veröffentlichungstag der Anmeldung: 12.11.1997
(73) Patentinhaber: Elpro BahnstromAnlagen GmbH, 13053 Berlin (DE)
(72) Erfinder: GERLACH, Horst, D-13055 Berlin (DE)
(86) Internationale Anmeldenummer: EP9500238
(87) Internationale Veröffentlichungsnummer: WO9623343

(56) Entgegenhaltungen:
- EP-A- 0 105 816
- EP-A- 0 239 863
- CA-A- 1 307 822
- DE-C- 755 291
- FR-A- 2 535 916
- ELEKTRONIK Bd. 6, Nr. 15, Juni 1966, MÜNCHEN, Seiten 187 - 188 DR.F.DEPPING 'Eine elektronish-mechanische Überspannungsschutzeinrichtung.'

## Beschreibung

Bei Gleichstrombahnen werden üblicherweise die Fahrschienen zum Leiten des Stromes benutzt. Zur Verringerung der Streustrom-Korrosionsgefahr dürfen die Gleisanlagen nicht mit Anlagen, Bauteilen oder Bauwerken mit Erderwirkung leitend verbunden werden. Somit wird das Schienenpotential der Gleisanlage, als Bahnerde bezeichnet, isoliert vom allgemeinen Erdpotential, der sogenannten Wassererde, betrieben. Dadurch können erhebliche Potentialunterschiede zwischen Schienenpotential und Erdpotential auftreten. Überschreiten diese Potentialdifferenzen einen bestimmten Wert, werden sie für Menschen zu einer Gefahr, insbesondere an solchen Stellen, wo durch die räumliche Nähe der potentialführenden Teile die Möglichkeit der Überbrückung durch den Körper besteht. Das trifft insbesondere für solche Stellen zu, wo sich z. B. Brückenteile oder Schienen einer Wechselstrombahn, die mit Erdpotential verbunden sind, in der Nähe der Gleise einer Gleichstrombahn befinden. An solchen Stellen ist aus Gründen des Schutzes gegen gefährliche Körperströme eine zumindest zeitweise leitende Verbindung zwischen der Bahnerde und der Wassererde, für die Dauer der Gefährdung herzustellen. Durch derartige Potentialunterschiede können auch Anlagenteile, z. B. Bahnstromversorgungsanlagen, gefährdet werden, so daß auch zum Schutz der Anlagen ein Potentialausgleich hergestellt werden muß.

Üblicherweise werden zwischen solchen, unterschiedliches Potential führenden, Teilen Spannungsdurchschlagsicherungen eingesetzt. Bei Überschreiten einer vorgegebenen Spannung, die einen gefährlichen Körperstrom verursachen kann, sprechen diese an und stellen eine metallische, elektrisch leitende Verbindung zwischen der Fahrschiene der Gleichstrombahn (Bahnerde) und der Fahrschiene einer Wechselstrombahn bzw. Brückenteilen (Wassererde) her. Dieser Zustand darf nach bestehenden Vorschriften nur kurzzeitig aufrechterhalten werden. Die Betreiber von solchen Gleichstrombahnen haben deshalb den Zustand der Spannungsdurchschlagsicherungen kontinuierlich zu überwachen und im Falle des Ansprechens einer solchen Spannungsdurchschlagsicherung die geforderte Potentialtrennung unverzüglich, z. B. durch Auswechseln der defekten Sicherung, wieder herzustellen.

Es gibt auch Einrichtungen, die bei Überschreiten einer vorgegebenen Potentialdifferenz zwischen Bahnerde und Wassererde den Potentialausgleich mit schnellen Schaltern (Kurzschließern) herstellen und bei Unterschreiten eines voreingestellten Potentialausgleichstromes die Potentialtrennung durch Öffnen des Schalters wieder herbeiführen. Solche Einrichtungen sind sehr kostenaufwendig und zusätzlich ständig auf ihre Funktionstüchtigkeit zu überwachen.

Eine Anordnung zur Vermeidung von Überspannungen zwischen zwei Potentialebenen ist in der kanadischen Patentanmeldung CA Al 1307822 beschrieben. Bei Überschreiten eines Spannungsgrenzwertes bewirkt ein Sensor daß ein Thyristorschalter die beiden Potentialebenen kurzschließt. Zur Gewährleistung der Richtungsunabhängigkeit des Potentialausgleiches sind zwei Thyristorschalter mit je einem Sensor antiparallel angeordnet.

Die Aufgabe besteht darin, ein einfaches und zuverlässig arbeitendes Gerät vorzuschlagen, welches bei Überschreiten einer vorgegebenen Potentialdifferenz einen schnellen Potentialausgleich gewährleistet und bei Unterschreiten dieser Potentialdifferenz den mechanischen Kurzschluß wieder aufhebt.

Erfindungsgemäß wird diese Aufgabe durch die Merkmale des Anspruchs 1 gelöst.

Vorteilhafterweise wird die Spule aus zwei Teilspulen aufgebaut, die derart verschaltet sind, daß sie sich bei einem fließenden Ausgleichstrom gegenseitig abstoßen. Eine Teilspule ist fest angeordnet, während die andere Teilspule beweglich angeordnet und fest mit dem Kurzschlußkontakt verbunden ist.

Bei Überschreiten eines vorgegebenen Ausgleichstromes wird der Kurzschlußkontakt, gegen eine voreingestellte mechanische Rückstellkraft, geschlossen und überbrückt die Anschlußklemmen.

Sinkt der Ausgleichstrom wieder unter den voreingestellten Wert, wird die mechanische Rückstellkraft größer als die Kraft der Spule und der Kurzschlußkontakt öffnet wieder.

Vorteilhafterweise können die einzelnen Zustände des Überspannungsschutzgerätes erfaßt und dem entsprechenden Bedienpersonal gemeldet werden.

Bei einer ersten erfindungsgemäßen Ausgestaltung ist der Kurzschlußkontakt fest mit einem Anker aus magnetischem Material verbunden, der in der Kurzschlußstellung durch einen Permanentmagneten arretiert wird. Diese Arretierung kann dadurch gelöst werden, daß durch einen kurzen Stromstoß in eine Entmagnetisierungswicklung die Wirkung des Permanentmagneten kurzzeitig aufgehoben wird und die mechanische Rückstellkraft den Kurzschlußkontakt öffnet. Bei dieser Ausführung ist die Spule vorzugsweise als Luftspule ausgestaltet.

In einer zweiten erfindungsgemäßen Ausgestaltung ist parallel zur Spule eine Freilaufdiode derart angeordnet, daß bei Auftreten eines Wechselstromes oder bei kurzzeitigem Absinken des Ausgleichstromes ein Stromfluß durch die Spule aufrechterhalten wird, so daß der Kurzschlußkontakt nicht sofort öffnet.

Bei einer weiteren erfindungsgemäßen Ausgestaltung des Überspannungsschutzgerätes wird eine Verzögerung der Öffnung des Kurzschlußkontaktes, beispielsweise bei kurzzeitigem Absinken des Ausgleichstromes, durch mechanische Mittel erreicht, z. B. durch die Vergrößerung der Masse des Schaltkontaktes oder durch Dämpfung der Öffnungsbewegung.

Weitere vorteilhafte Merkmale und Ausgestaltungen der Erfindung können den Ansprüchen entnommen werden.

Die Erfindung soll nachstehend anhand von Ausführungsbeispielen näher erläutert werden. Die dazugehörigen Zeichnungen stellen dar:
- Fig 1:: Schaltungsanordnung des Überspannungsschutzgerätes mit magnetischer Arretierung
- Fig 2:: Schaltungsanordnung des Überspannungsschutzgerätes mit Freilaufdiode
- Fig 3:: Schaltungsanordnung des Überspannungsschutzgerätes ohne Freilaufdiode

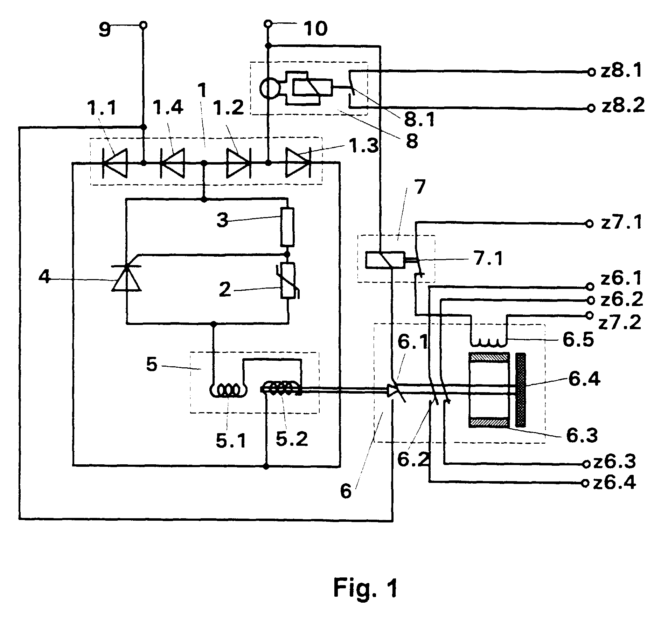

Das Überspannungsschutzgerät, in einer ersten Ausführungsvariante gem. Fig.1, wird mit seinen Klemmen 9 und 10 zwischen zwei Potentialebenen angeschlossen. Die Potentialebenen können beispielsweise sein:
a) Wassererde - Bahnerde
b) Bahnerde - Stromschiene/Gleichspannung.

Ein Ausgleichstrom fließt von der ersten Potentialebene an der Klemme 9 über eine Reihenschaltung bestehend aus einer Diode 1.1, einer Luftspule 5, einem Varistor 2 einem niederohmigen Widerstand 3, und einer zweiten Diode 1.2 zur zweiten Potentialebene an der Klemme 10. Ein Ausgleichstrom in umgekehrter Richtung fließt von der Klemme 10 über eine erste Diode 1.3, die Luftspule 5, über den Varistor 2, den Widerstand 3 und eine zweite Diode 1.4 zur Klemme 9. Über diese Reihenschaltung wird jede auftretende Überspannung augenblicklich abgebaut und der Thyristor 4, der parallel zur Reihenschaltung bestehend aus Varistor 2 und Widerstand 3 angeordnet ist, wird gezündet. Über diese Anordnung werden Ausgleichströme bis zu einer vorgegebenen Größenordnung beherrscht. Diese Ausgleichströme werden durch eine Meß- und Meldeeinrichtung 8 erfaßt und durch die potentialfreien Kontakte 8.1 über die Klemmen z8.1 und z8.2 gemeldet.

Die Luftspule 5 besteht aus zwei Teilspulen 5.1 und 5.2, die eine geringe Induktivität besitzen und derart angeordnet sind, daß sie sich bei fließendem Ausgleichstrom gegenseitig abstoßen. Die Teilspule 5.1 ist fest angeordnet und die Teilspule 5.2 ist beweglich angeordnet, aber fest mit dem Kurzschließer 6 verbunden. Der Kurzschließer 6 wird durch eine nicht dargestellte mechanische Rückstellkraft in seiner Öffnungsstellung gehalten. Bewirkt der Ausgleichstrom durch den Thyristor 4 und die Luftspule 5 zwischen den beiden Teilspulen 5.1 und 5.2 eine Kraft, die größer ist als die voreingestellte Rückstellkraft, wird der Kurzschließer 6 geschlossen und ein Potentialausgleich zwischen den Anschlußklemmen 9 und 10 hergestellt, indem der Kurzschlußkontakt 6.1 geschlossen und durch einen Anker 6.4 aus magnetischem Material, der gegen einen Permanentmagneten 6.3 bewegt und durch diesen in dieser Stellung verriegelt wird. Bei Absinken des Ausgleichstromes unter einen voreingestellten Wert, wird durch eine Erfassungseinrichtung 7 und deren potentialfreien Öffner eine Entriegelung möglich, indem über die Klemmen z7.1 und z7.2 ein kurzzeitiger energiearmer Stromstoß in die Entriegelungswicklung 6.5 die Arretierung des Kurzschließers 6 aufhebt und er durch die Rückstellkraft geöffnet wird, so daß die Potentialtrennung zwischen den beiden Potentialebenen wieder hergestellt ist.

Besteht nach dem Öffnen des Kurzschlußkontaktes 6.1 eine zu große Potentialdifferenz zwischen den Klemmen 9 und 10, wird der Thyristor 4 sehr schnell wieder gezündet, so daß der Potentialausgleich bei kleinen Ausgleichströmen durch die Strombahn Thyristor 4, Luftspule 5, die sehr niederohmig und induktivitätsarm ist, sowie die Dioden 1.1, 1.2 bzw. 1.3, 1.4 erfolgt.

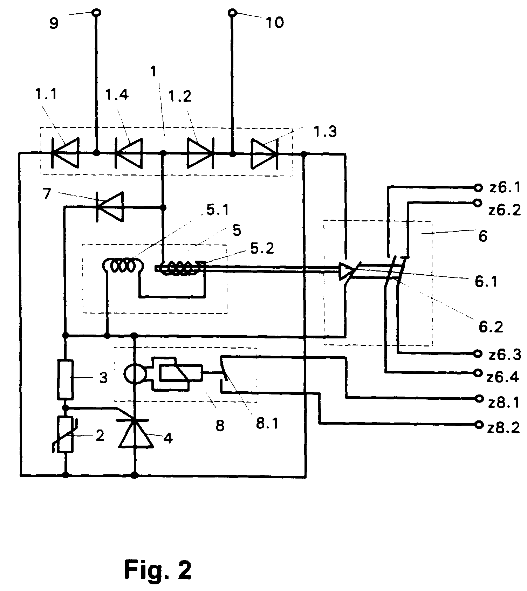

In der Fig. 2 wird eine Ausführungsform des Überspannungsschutzgerätes unter Verwendung einer Freilaufdiode dargestellt.
Das Überspannungsschutzgerät wird ebenfalls mit seinen Klemmen 9 und 10 zwischen zwei Potentialebenen angeschlossen. Ein Ausgleichstrom fließt analog zur ersten Ausführungsform von der ersten Potentialebene zur zweiten Potentialebene, wobei jede auftretende Überspannung augenblicklich durch das Überspannungsschutzgerät abgebaut wird.

Die weitere Wirkungsweise dieser Ausführungsform entspricht der vorbeschriebenen der ersten Ausführungsvariante, wobei allerdings keine magnetische Verriegelung des Kurzschließers 6 erfolgt. Der Kurzschlußkontakt 6.1 bleibt solange geschlossen, bis der fließende Ausgleichstrom den voreingestellten Wert unterschreitet.

Parallel zu den beiden Teilspulen 5.1 und 5.2 ist eine Freilaufdiode 7 angeordnet, die bewirkt, daß bei fließenden Wechselströmen oder kurzzeitigen Stromänderungen der Kurzschlußkontakt nicht sofort wieder öffnet, indem durch die Freilaufdiode 7 eine vorübergehende Aufrechterhaltung des Ausgleichstromes durch die Spule 5 erreicht wird.

Die Spule 5 wird vorzugsweise als eisengeschlossene Spule ausgebildet, damit durch ein großes Verhältnis von Induktivität zu ohmschem Widerstand ein relativ hoher Freilaufstrom durch die Spule erreicht wird.

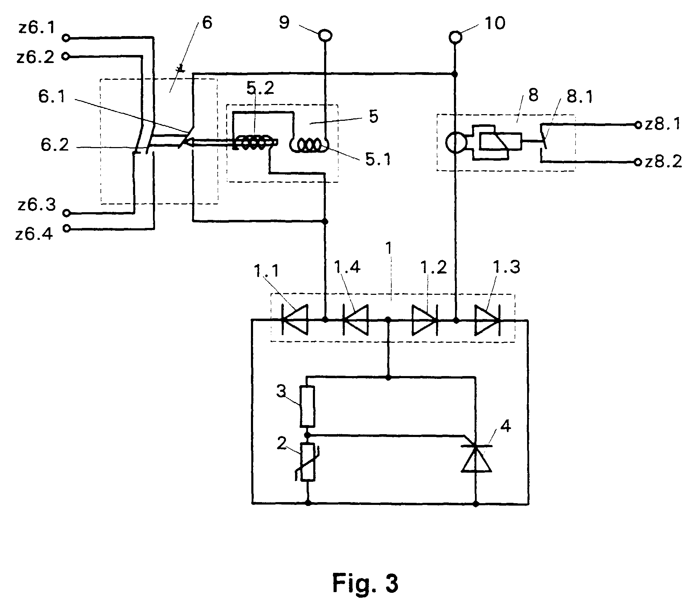

Eine weitere Ausführungsvariante eines Überspannungsschutzgerätes, ohne Verwendung einer Freilaufdiode und selbsttätiger Aufhebung des Potentialausgleiches ist in der Fig. 3 dargestellt.

Die Spule 5 befindet sich in der Strombahn für den Ausgleichstrom zwischen der Anschlußklemme 9 und dem Gleichrichter 1. Bei Überschreiten eines vorgegebenen Ausgleichstromes schließt die Spule 5 den Kurzschlußkontakt 6.1, so daß der Ausgleichstrom durch die Spule 5 direkt von der Anschlußklemme 9 zur Anschlußklemme 10 bzw. umgekehrt fließt. Damit der Kurzschließer 6 nicht bei kurzzeitigem Absinken des Ausgleichstromes öffnet ist bei dieser Ausführungsform eine mechanische Verzögerung in bekannter Weise, z. B. durch Vergrößerung der zu bewegenden Masse oder eine Bedämpfung der Öffnungsbewegung vorzusehen.

Besteht nach dem Öffnen des Kurzschlußkontaktes 6.1 eine zu große Potentialdifferenz zwischen den Klemmen 9 und 10, wird auch bei diesen beiden Ausführungsvarianten der Thyristor 4 sehr schnell wieder gezündet, so daß der Potentialausgleich bei kleinen Ausgleichströmen durch die Strombahn Thyristor 4, Spule 5 sowie die Dioden 1.1, 1.2 bzw. 1.3, 1.4 erreicht wird.

Die Meldungen über den Zustand des Überspanungsschutzgerätes, durch die potentialfreien Kontakte 6.2 bzw. 8.1 werden über die Klemmen z6.1, z6.2; z6.3, z6.4; bzw. z8.1, z8.2 und Femwirkleitungen an eine Zentrale übermittelt. Von dort aus kann ebenfalls über Femwirkleitungen und die Klemmen z7.1, z7.2 der Stromstoß in die Entriegelungswicklung 6.5 ausgelöst werden.

## Patentansprüche

1. Überspannungsschutzgerät zur Gewährleistung eines Potentialausgleiches bei Überschreiten einer vorgegebenen Spannung zwischen zwei Potentialebenen, das mit seinen Anschlußklemmen (9, 10) zwischen diesen beiden Potentialebenen angeordnet ist und bei Überschreiten eines Spannungs-Grenzwertes beide Spannungsebenen kurzgeschlossen werden, **dadurch gekennzeichnet**, daß ein Ausgleichstrom von einer Anschlußklemme (9 bzw. 10) durch eine Reihenschaltung einer ersten Diode (1.1 bzw. 1.3), eines Varistors (2), eines Widerstandes (3), einer Spule (5) und einer zweiten Diode (1.2 bzw. 1.4) zur anderen Anschlußklemme (10 bzw. 9) fließt und der Spannungsabfall am Widerstand (3) einen Thyristor (4) zündet, der parallel zur Reihenschaltung Varistor (2) und Widerstand (3) angeordnet ist, wodurch der Ausgleichstrom nun auf den Thyristor (4) kommutiert; bei Überschreiten eines vorgegebenen Ausgleichstromes bewirkt die Spule (5) das Schließen eines Kurzschließers (6), wodurch die an den Anschlußklemmen (9, 10) anliegenden Potentialebenen kurzgeschlossen werden.

2. Überspannungsschutzgerät nach Anspruch 1, **dadurch gekennzeichnet**, daß die Spule (5) aus zwei Teilspulen (5.1, 5.2) besteht, die sich gegenseitig abstoßen, von denen eine Teilspule (5.1) fest angeordnet ist und der Kurzschließer (6) fest mit der beweglichen Teilspule (5.2) verbunden ist.

3. Überspannungsschutzgerät nach Anspruch 1 und 2, **dadurch gekennzeichnet**, daß die Kurzschlußstellung eines Kurzschlußkontaktes (6.1) des Kurzschließers (6) durch potentialfreie Kontakte (6.2) erfaßt und gemeldet wird.

4. Überspannungsschutzgerät nach Anspruch 1 bis 3, **dadurch gekennzeichnet**, daß der durch den Thyristor (4) und die Spule (5) fließende Ausgleichstrom mittels einer Meß- und Meldeeinrichtung (8) erfaßt und durch potentialfreie Kontakte (8.1) gemeldet wird.

5. Überspannungsschutzgerät nach Anspruch 1 bis 4, **dadurch gekennzeichnet**, daß der Kurzschlußkontakt (6.1) fest mit einem Anker (6.4) aus magnetischem und geblechtem Material verbunden ist, der beim Schließen des Kurzschlußkontaktes (6.1) in Richtung auf einen Permanentmagneten (6.3) bewegt wird und durch diesen in der Kurzschlußstellung des Kurzschlußkontaktes (6.1) arretiert wird.

6. Überspannungsschutzgerät nach Anspruch 1 bis 5, **dadurch gekennzeichnet**, daß durch einen Stromstoß in eine Entmagnetisierungswicklung (6.5) die Wirkung des Permanentmagneten (6.3) kurzzeitig aufgehoben wird, so daß der Anker durch eine entsprechende Rückstellkraft vom Permanentmagneten (6.3) gelöst wird und der Kurzschlußkontakt (6.1) geöffnet wird.

7. Überspannungsschutzgerät nach Anspruch 1 bis 6, **dadurch gekennzeichnet**, daß eine Erfassungseinrichtung (7) in Reihe mit dem Kurzschlußkontakt (6.1) angeordnet ist, deren potentialfreier Öffner (7.1) in Reihe mit der Entmagnetisierungswicklung (6.5) angeordnet ist und eine Entriegelung des Kurzschlußkontaktes (6.1) nur möglich ist, wenn der Kurzschlußstrom unter einen vorgegebenen Wert abgesunken ist.

8. Überspannungsschutzgerät nach Anspruch 1, **dadurch gekennzeichnet**, daß beim Schließen des Kurzschließers (6) ein Potentialausgleich zwischen den Anschlußklemmen (9, 10) über den Gleichrichter (1) und die Spule (5) erfolgt.

9. Überspannungsschutzgerät nach Anspruch 1, **dadurch gekennzeichnet**, daß beim Schließen des Kurzschließers (6) ein Potentialausgleich zwischen den Anschlußklemmen (9, 10) direkt über die Spule (5) erfolgt.

10. Überspannungsschutzgerät nach Anspruch 1 und 8, **dadurch gekennzeichnet**, daß parallel zu den beiden Teilspulen (5.1, 5.2) eine Freilaufdiode (7) angeordnet ist.

11. Überspannungsschutzgerät nach Anspruch 1 und 9, **dadurch gekennzeichnet**, daß die Rückwärtsbewegung des Kurzschlußkontaktes (6.1) mechanisch verzögert wird.

## Claims

1. A voltage surge protection device to ensure potential compensation when a specified voltage between two potential levels is exceeded, which is connected with its terminals (9, 10) between these two potential levels and which short-circuits both potential levels when a voltage limit is exceeded. **This is characterised by** a compensating current which flows from one terminal (9 or 10) through a series circuit consisting of a first diode (1.1 or 1.3), a varistor (2), a resistor (3), a coil (5) and a second diode (1.2 or 1.4) to the other terminal (10 or 9) and that the voltage drop across the resistor (3) triggers a thyristor (4) which is connected in parallel to the varistor (2) and resistor (3) of the series circuit, by which the compensating current is then commuted to the thyristor (4). When a specified compensating current is exceeded, the coil (5) causes a short-circuit relay (6) to close, by which the potential levels connected to terminals (9, 10) are short-circuited.

2. A voltage surge protection device according to claim 1, **characterised by the fact that** the coil (5) consists of two windings (5.1, 5.2) which repel each other, of which one winding (5.1) is fixed and the short-circuit relay (6) is attached to the moving winding (5.2).

3. A voltage surge protection device according to claims 1 and 2, **characterized by the fact that** the short-circuit position of a short-circuit contact (6.1) ofthe short-circuit relay (6) is detected and signalled by galvanically isolated contacts (6.2).

4. A voltage surge protection device according to claims 1 to 3, **characterized by the fact that** the compensating current flowing through the thyristor (4) and the coil (5) is detected by a measuring and signalling device (8) and is signalled by galvanically isolated contacts (8.1).

5. A voltage surge protection device according to claims 1 to 4, **characterized by the fact that** the short-circuit contact (6.1) is attached to an armature (6.4) made of magnetic sheet material, which is moved towards a permanent magnet (6.3) when the short-circuit contact closes and by which the short-circuit position of the short-circuit contact (6.1) is retained.

6. A voltage surge protection device according to claims 1 to 5, **characterized by the fact that** a current surge into a degaussing coil (6.5) briefly interrupts the effect ofthe permanent magnet (6.3) so that the armature is released by an associated return force from the permanent magnet (6.3) and the short-circuit contact (6.1) is opened.

7. A voltage surge protection device according to claims 1 to 6, **characterized by the fact that** a detecting device (7) is connected in series with the short-circuit contact (6.1), whose galvanically isolated break-circuit contact (7.1) is connected in series with the degaussing coil (6.5) and which allows the short-circuit contact (6.1) to be disengaged only when the short-circuit current has fallen below a specified value.

8. A voltage surge protection device according to claim 1, **characterized by the fact that** potential compensation between the terminals (9, 10) is made through the rectifier (1) and the coil (5) when the short-circuit relay (6) closes.

9. A voltage surge protection device according to claim 1, **characterized by the fact that** potential compensation between the terminals (9, 10) is made directly through the coil (5) when the short-circuit relay (6) closes.

10. A voltage surge protection device according to claims 1 and 8, **characterized by the fact that** a bypass diode (7) is connected in parallel to the two windings (5.1, 5.2).

11. A voltage surge protection device according to claims 1 and 9, **characterized by the fact that** the return movement of the short-circuit contact (6.1) is delayed mechanically.

## Revendications

1. Limiteur de tension destiné garantir une compensation de potentiel en cas de dépassement d'une tension prédéfinie entre deux niveaux de potentiel, limiteur de tension qui est disposé avec ses bornes de raccordement (9, 10) entre ces deux niveaux de potentiel et, en cas de dépassement d'une valeur limite de tension, les deux niveaux de tension étant court-circuités, **caractérisé en ce qu'**un courant compensateur passe d'une borne de raccordement (9 ou 10), travers un montage en série d'une première diode (1.1 ou 1.3), d'un varistor (2), d'une résistance (3), d'une bobine (5) et d'une deuxième diode (1.2 et 1.4), l'autre borne de raccordement (10 ou 9), et la chute de tension sur la résistance (3) met en circuit un thyristor (4) qui est disposé parallèlement au montage en série du varistor (2) et de la résistance (3), de manière que le courant compensateur commute maintenant sur le thyristor (4); en cas de dépassement d'un courant compensateur prédéfini, la bobine (5) provoque la fermeture d'un court-circuiteur (6) en court-circuitant les niveaux de potentiel appliqués sur les bornes de raccordement (9, 10).

2. Limiteur de tension selon la revendication 1, **caractérisé en ce que** la bobine (5) se compose des bobines partielles (5.1, 5.2) qui se repoussent mutuellement, une bobine partielle (5.1) étant disposée demeure et le court-circuiteur (6) étant relié demeure avec la bobine partielle mobile (5.2).

3. Limiteur de tension selon la revendication 1 et 2, **caractérisé en ce que** la position de court-circuit d'un contact de court-circuit (6.1) du court-circuiteur (6) est saisie et signalée par des contacts non polarisés (6.2).

4. Limiteur de tension selon la revendication 1 et 3, **caractérisé en ce que** le courant compensateur passant travers le thyristor (4) et la bobine (5) est saisi au moyen d'un dispositif de mesure et de signalisation (8) et signalé par des contacts non polarisés (8.1).

5. Limiteur de tension selon la revendication 1 et 4, **caractérisé en ce que** le contact de court-circuit (6.1) est relié demeure avec un induit (6.4) fait d'un matériau magnétique et laminé qui, lors de la fermeture du contact de court-circuit (6.1), est déplacé dans le sens d'un aimant permanent (6.3) et bloqué, par celui-ci dans la position de court-circuit du contact de court-circuit (6.1).

6. Limiteur de tension selon la revendication 1 et 5, **caractérisé en ce que** l'effet de l'aimant permanent (6.3) est instantanément annulé par un coup de courant dans une bobine de démagnétisation de telle sorte que l'enduit est déclenché par une force de rappel de l'aimant permanent (6.3) et que le contact de court-circuit (6.1) est ouvert.

7. Limiteur de tension selon la revendication 1 et 6, **caractérisé en ce qu'**un dispositif de saisie (7) est disposé en série avec le contact de court-circuit (6.1) dont le contact de repos non polarisé (7.1) est disposé en série avec la bobine de démagnétisation et un déverrouillage du contact de court-circuit (6.1) n'est possible que si le courant de court-circuit est tombé en dessous d'une valeur prédéfinie.

8. Limiteur de tension selon la revendication 1, **caractérisé en ce que**, lors de la fermeture du court-circuiteur (6), il y a une compensation de potentiel entre les bornes de raccordement (9, 10) via le redresseur (1) et la bobine (5).

9. Limiteur de tension selon la revendication 1, **caractérisé en ce que**, lors de la fermeture du court-circuiteur (6), il y a une compensation de potentiel entre les bornes de raccordement (9, 10) directement via le redresseur (1) et la bobine (5).

10. Limiteur de tension selon la revendication 1 et 8, **caractérisé en ce qu'**une diode de roue libre (7) est disposée parallèlement aux deux bobines partielles (5.1, 5.2).

11. Limiteur de tension selon la revendication 1 et 9, **caractérisé en ce que** le mouvement arrière du contact de court-circuit (6.1 ) est retardé mécaniquement.
